# EUROPÄISCHE PATENTSCHRIFT

(11) **EP 1 825 159 B1**
(45) Veröffentlichungstag und Bekanntmachung des Hinweises auf die Patenterteilung: **21.05.2008**
(21) Anmeldenummer: 05821256.4
(22) Anmeldetag: 19.12.2005
(51) Int. Cl.: F16D 13/64, F16D 69/04, B23P 15/00

(54) **VERFAHREN ZUM HERSTELLEN EINER REIBLAMELLE**
METHOD FOR PRODUCING A FRICTION DISK
PROCEDE DE PRODUCTION D'UNE LAMELLE DE FRICTION

(30) Priorität: 17.12.2004 DE 102004060933
(43) Veröffentlichungstag der Anmeldung: 29.08.2007
(73) Patentinhaber: Hoerbiger Antriebstechnik GmbH, 86956 Schongau (DE)
(72) Erfinder: KOHLBERGER, Wilhelm, 86899 Landsberg am Lech (DE); SCHMITT, Thilo, 86956 Schongau (DE)
(74) Vertreter: Schmitz, Hans-Werner
(86) Internationale Anmeldenummer: PCT/EP2005/013681
(87) Internationale Veröffentlichungsnummer: WO 2006/063859

(56) Entgegenhaltungen:
- EP-A- 0 625 647
- EP-A- 0 806 586
- EP-A- 1 422 435
- US-A1- 2005 066 507

## Beschreibung

Die Erfindung betrifft ein Verfahren zum Herstellen einer Reiblamelle gemäß Anspruch 1.

Bei Reiblamellen mit einem organischen Reibbelag wird bei konventionellen Herstellungsverfahren ein Ring aus dem Reibmaterial gestanzt und anschließend aufgeklebt. Diese Reibbeläge bestehen in der Regel aus relativ teuren faserverstärkten Kunststoffen.

Ferner sind Verfahren bekannt, bei denen einzelne kleinere Belagelemente einzeln gestanzt und anschließend auf die Lamelle aufgebracht werden. Dies setzt jedoch oft ein Zuschneiden des Ausgangsmaterials auf die entsprechende Ringbreite voraus und darüber hinaus gibt es Einschränkungen hinsichtlich Länge und Breite des Segmentes.

Ein solches Verfahren ist aus EP-A-1 422 435 bekannt.

Es ist daher Aufgabe der vorliegenden Erfindung, ein Verfahren zum Herstellen einer Reiblamelle zu schaffen, welches es ermöglicht, Material für die Belagsegmente einzusparen und eine kurze Bearbeitungszeit zum Aufbringen des Reibmaterials möglich zu machen.

Die Lösung dieser Aufgabe erfolgt durch die Merkmale des Anspruches 1.

Hierdurch wird neben der Lösung der Aufgabe der Vorteil erreicht, dass das Verfahren unabhängig vom Ausgangsmaterial ist und dass die Geometrie und die Anordnung der Belagsegmente frei wählbar ist.

Die Unteransprüche haben vorteilhafte Weiterbildungen der Erfindung zum Inhalt.

Gemäß den Prinzipien des erfindungsgemäßen Verfahrens wird zur Herstellung einer Reiblamelle zunächst ein Trägerring erzeugt, der üblicherweise aus Metall besteht. Hierbei ist es möglich, den Trägerring aus einer Innenlamelle und einer Außenlamelle aufzubauen.

Danach werden Belagelemente aus einem Grundmaterial, insbesondere einem organischem Reibbelag, zugeschnitten, wobei bevorzugter Weise das Zuschneiden durch einen Stanzvorgang erfolgt.

Die zugeschnittenen Belagelemente werden in Magazine eingelegt oder es ist möglich, die einzelnen Segmente gleichzeitig in Gruppen oder einzeln direkt in die Magazine einzustanzen. Hierbei ist vorzugsweise ein Zuschneiden des Coilmaterials oder des Plattenmaterials nicht notwendig. Die Form und Größe der Belagsegmente wird alleine durch das verwendete Werkzeug bestimmt.

Danach werden die befüllten Magazine in Kreisform in einer Montagevorrichtung angeordnet.

Danach kann der Trägerring der zu erzeugenden Reiblamelle mit einer Seite auf die Magazine aufgedrückt werden, wodurch das jeweils in den Magazinen oberste Belagsegment an der auf die Magazine aufgedrückten Seite des Trägerrings fixiert wird.

Nach einem Wenden des einseitig beschichteten Trägerrings kann die andere noch segmentfreie Seite auf die Magazine aufgedrückt werden, wodurch wiederum die obersten Segmente aus den Magazinen an der Seite fixiert werden.

Somit können in zwei Arbeitsgängen durch die kreisförmige Anordnung der Magazine die beiden Seiten des Trägerringes komplett oder auch nur in Teilabschnitten mit Belagsegmenten bestückt werden.

Hierzu ist es vorzugsweise möglich, entweder die Lamelle vorzuwärmen, um den auf die Seiten der Lamelle aufgebrachten Klebstoffe anzuweichen. Alternativ ist es möglich, die beiden Seiten der Lamelle mit feuchtem Kleber zu benetzen, oder mit einer Dosiereinrichtung die obersten Segmente mit Kleber zu versehen.

Erfindungsgemäß ist es natürlich auch möglich, lediglich eine Seite der Lamelle mit Belagsegmenten zu versehen.

Ferner ist es möglich, die Magazine entweder oben oder unten in der Montagevorrichtung einzusetzen und dementsprechend den Träger entweder von unten oder von oben auf die Magazine zu drücken.

Weitere Einzelheiten, Vorteile und Merkmale der vorliegenden Erfindung ergeben sich aus nachfolgender Beschreibung anhand der Zeichnung. Darin zeigt:
- Fig. 1 und 2: eine schematisch stark vereinfachte Darstellung zur Erläuterung des Verfahrensschrittes des Zuschneidens von Belagsegmenten, und
- Fig. 3: eine ebenfalls stark vereinfachte schematische Darstellung zur Erläuterung des Aufbringens von Belagsegmenten auf einen Trägerring.

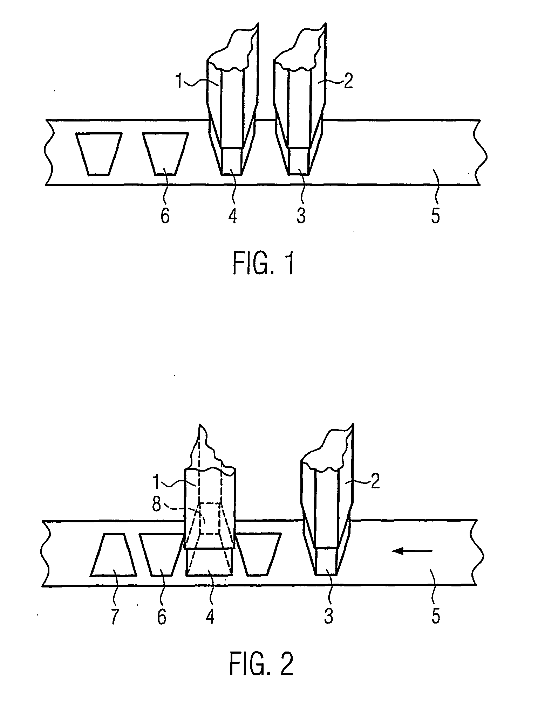

In den Fig. 1 und 2 sind stark vereinfachte Segmentmagazine 1 und 2 dargestellt, unter denen Stanzwerkzeuge 3 und 4 vorgesehen sind. Die Stanzwerkzeuge 3 und 4 stanzen Belagsegmente aus einem Reibbelagmaterialstreifen (Reibbelagpapier) 5 aus, die im Beispielsfalle eine kegelstumpfförmige Form haben, wie sie sich aus dem ausgestanzten Bereich 6 des Materialstreifens 5 der Fig. 1 ergibt.

Gemäß Fig. 2 können die Stanzwerkzeuge 3 und 4 auch um 180° gedreht angeordnet sein, so dass sich eine abwechselnde Orientierung ergibt, wie sie sich aus den ausgestanzten Bereichen 6 und 7 gemäß Fig. 2 ergibt.

Nach dem Ausstanzvorgang werden die ausgestanzten Segmente in die Segmentmagazine 1 und 2 geladen, was in Fig. 2 durch das strichlierte Segment 8 symbolisiert ist.

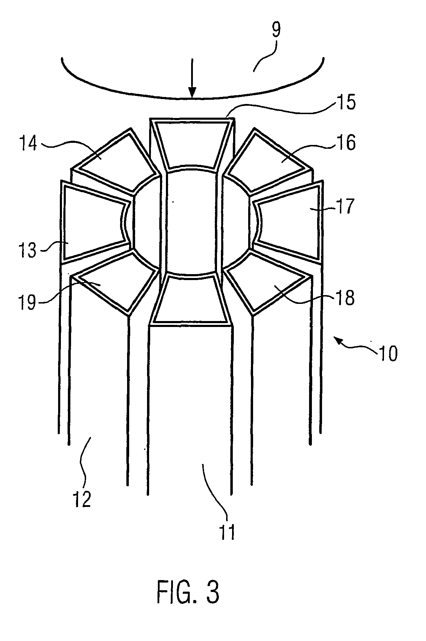

Fig. 3 verdeutlicht in schematisch stark vereinfachter Art und Weise die Aufbringung von Belagsegmenten auf einen Träger, der mit der Bezugsziffer 9 bezeichnet ist.

In Fig. 3 ist ferner ein Magazin 10 dargestellt, dass im Beispielsfalle aus acht Segmentmagazinen 11 bis 18 zusammengestellt ist, die kreisförmig angeordnet sind.

Der jeweils zuoberst angeordnete Reibbelag weist mit seiner Klebeseite nach oben, was beispielhaft durch den Reibbelag 19 des Segmentmagazins 12 symbolisiert ist.

Die Lamelle bzw. der Träger 9 wird auf die magazinierten Belagsegmente aufgelegt und danach haften die Segmente am Träger 9 an.

Ferner ist es möglich, ein weiteres Magazin oberhalb des Trägers 9 anzuordnen, was die gleichzeitige Bestückung beider Seiten des Trägers 9 mit Reibbelägen bzw. Belagsegmenten ermöglicht.

### Bezugszeichenliste

- 1, 2: Segmentmagazine
- 3, 4: Stanzwerkzeuge
- 5: Reibbelagpapier
- 6, 7: Ausgestanzte Bereiche
- 8: Magaziniertes Belagsegment
- 9: Träger
- 10: Magazin
- 11 bis 18: Einzelne Segmentmagazine
- 19: Oberstes Reibbelagsegment mit nach oben weisender Klebefläche

## Patentansprüche

1. Verfahren zum Herstellen einer Reiblamelle mit folgenden Verfahrensschritten:
- Bereitstellen eines Trägerringes;
- Zuschneiden von Belagsegmenten aus einem Grundmaterial;
- Einführen der Belagsegmente in Magazine;
- Einsetzen der Magazine in kreisförmige Anordnungen in einer Montagevorrichtung; und
- Aufdrücken einer Seite des Trägerringes auf die Magazine und Fixieren von Belagsegmenten auf dieser Seite.

2. Verfahren nach Anspruch 1, **gekennzeichnet durch** die folgenden Verfahrensschritte:
- Wenden des einseitig mit Belagsegmenten versehenen Trägerringes; und
- Andrücken der noch segmentfreien Seite des Trägerringes auf die Magazine und Fixieren von Belagsegmenten auf dieser Seite des Trägerringes.

3. Verfahren nach Anspruch 1 oder 2, **dadurch gekennzeichnet, dass** die Belagsegmente gestanzt werden.

4. Verfahren nach Anspruch 3, **dadurch gekennzeichnet, dass** die Belagsegmente im Zuge des Stanzens in die Magazine eingeführt werden.

5. Verfahren nach einem der Ansprüche 1 bis 4, **dadurch gekennzeichnet, dass** auf dem Trägerring vorhandener Klebstoff durch Erwärmen angeweicht wird.

6. Verfahren nach einem der Ansprüche 1 bis 4, **dadurch gekennzeichnet, dass** der Trägerring mit feuchtem Kleber benetzt wird.

7. Verfahren nach einem der Ansprüche 1 bis 6, **dadurch gekennzeichnet, dass** die Magazine in einem oberen Bereich der Montagevorrichtung angeordnet werden.

8. Verfahren nach einem der Ansprüche 1 bis 6, **dadurch gekennzeichnet, dass** die Magazine in einem unteren Bereich der Montagevorrichtung angeordnet werden.

9. Verfahren nach einem der Ansprüche 1 bis 8, **dadurch gekennzeichnet, dass** die Belagsegmente aus organischem Material hergestellt werden.

10. Verfahren nach einem der Ansprüche 1 bis 4, **dadurch gekennzeichnet, dass** der Trägerring aus metallischem Material hergestellt wird.

11. Verfahren nach einem der Ansprüche 1 bis 4, **dadurch gekennzeichnet, dass** die Belagsegmente mit Kleber benetzt werden.

12. Verfahren nach einem der Ansprüche 1 bis 5 bzw. 9 bis 12, **dadurch gekennzeichnet, dass** Magazine oberhalb und unterhalb zum Bestücken des Trägerrings angeordnet werden.

## Claims

1. Method for producing a friction disc, having the following method steps:
- providing a carrier ring;
- cutting lining segments from a base material to size;
- inserting the lining segments into magazines;
- using the magazines in circular arrangements in a mounting device; and
- pressing one side of the carrier ring onto the magazines and fixing lining segments on this side.

2. Method according to Claim 1, **characterized by** the following method steps:
- turning the carrier ring provided with lining segments on one side; and
- pressing the as yet segment-free side of the carrier ring on to the magazines and fixing lining segments on this side of the carrier ring.

3. Method according to Claim 1 or 2, **characterized in that** the lining segments are punched.

4. Method according to Claim 3, **characterized in that** the lining segments are inserted into the magazines in the course of the punching.

5. Method according to one of Claims 1 to 4, **characterized in that** adhesive present on the carrier ring is softened by heating.

6. Method according to one of Claims 1 to 4, **characterized in that** the carrier ring is wetted with moist adhesive.

7. Method according to one of Claims 1 to 6, **characterized in that** the magazines are arranged in an upper region of the mounting device.

8. Method according to one of Claims 1 to 6, **characterized in that** the magazines are arranged in a lower region of the mounting device.

9. Method according to one of Claims 1 to 6, **characterized in that** the lining segments are produced from organic material.

10. Method according to one of Claims 1 to 4, **characterized in that** the carrier ring is produced from metallic material.

11. Method according to one of Claims 1 to 4, **characterized in that** the lining segments are wetted with adhesive.

12. Method according to one of Claims 1 to 5 or 9 to 12, **characterized in that** magazines are arranged above and below in order to equip the carrier ring.

## Revendications

1. Procédé de fabrication d'une lamelle de friction, comprenant les étapes suivantes :
- fourniture d'une bague porteuse ;
- découpe de segments de garniture dans un matériau caoutchouteux ;
- introduction des segments de garniture dans des magasins ;
- introduction des magasins dans des systèmes circulaires dans un dispositif de montage ; et
- pressage d'une face de la bague porteuse sur les magasins et fixation de segments de garniture sur cette face.

2. Procédé selon la revendication 1, **caractérisé par** les étapes suivantes
- retournement de la bague porteuse munie de segments de garniture sur une face ; et
- pressage de la face de la bague porteuse encore dépourvue de segments sur les magasins et fixation de segments de garniture sur cette face de la bague porteuse.

3. Procédé selon la revendication 1 ou 2, **caractérisé en ce que** les segments de garniture sont estampés.

4. Procédé selon la revendication 3, **caractérisé en ce que** les segments de garniture sont introduits dans les magasins au cours de l'estampage.

5. Procédé selon l'une des revendications 1 à 4, **caractérisé en ce qu'**un adhésif présent sur la bague porteuse est ramolli par chauffage.

6. Procédé selon l'une des revendications 1 à 4, **caractérisé en ce que** la bague porteuse est revêtue d'un adhésif humide.

7. Procédé selon l'une des revendications 1 à 6, **caractérisé en ce que** les magasins sont placés dans une zone supérieure du dispositif de montage.

8. Procédé selon l'une des revendications 1 à 6, **caractérisé en ce que** les magasins sont placés dans une zone inférieure du dispositif de montage.

9. Procédé selon l'une des revendications 1 à 8, **caractérisé en ce que** les segments de garniture sont fabriqués à partir d'un matériau organique.

10. Procédé selon l'une des revendications 1 à 4, **caractérisé en ce que** la bague porteuse est fabriquée à partir d'un matériau métallique.

11. Procédé selon l'une des revendications 1 à 4, **caractérisé en ce que** les segments de garniture sont revêtus d'adhésif.

12. Procédé selon l'une des revendications 1 à 5 resp. 9 à 12, **caractérisé en ce que** des magasins sont placés au-dessus et au-dessous pour charger la bague porteuse.
